# EUROPÄISCHE PATENTSCHRIFT

(11) **EP 2 000 069 B1**
(45) Veröffentlichungstag und Bekanntmachung des Hinweises auf die Patenterteilung: **08.02.2012**
(21) Anmeldenummer: 08157643.1
(22) Anmeldetag: 05.06.2008
(51) Int. Cl.: A47L 5/34, A47L 9/00, A47L 9/28, A47L 13/51, A47L 13/52

(54) **Reinigungswagen**
Cleaning trolley
Véhicule de nettoyage

(30) Priorität: 08.06.2007 DE 102007026566
(43) Veröffentlichungstag der Anmeldung: 10.12.2008
(73) Patentinhaber: VERMOP Salmon GmbH, 82205 Gilching (DE)
(72) Erfinder: Salmon, Dirk, 82205 Gilching (DE)
(74) Vertreter: HOFFMANN EITLE

(56) Entgegenhaltungen:
- EP-A2- 1 205 141
- CA-A1- 2 301 424
- FR-A1- 2 833 913
- US-A- 5 089 037
- US-A- 5 946 768
- US-A1- 2005 011 037
- US-A1- 2005 081 898

## Beschreibung

### Technisches Gebiet

Die vorliegende Erfindung betrifft einen Reinigungswagen, mit einer Basis, mindestens drei seitlich oder unter der Basis angeordneten Rädern sowie einem über der Basis angeordneten Aufbau zur Aufnahme von Reinigungsutensilien.

### Stand der Technik

Reinigungswagen dieser Art sind in den verschiedensten Ausführungsformen seit langem bekannt, wie beispielsweise aus der EP 1 568 581 B. Die Basis, welche in der Regel als tragende Plattform oder Rahmenanordnung ausgebildet ist, kann dabei aus einer Kunststoff- oder Metallplatte oder einer Metallrohrkonstruktionen bestehen.

Der Aufbau zur Aufnahme der Reinigungsutensilien wird häufig von einer Säulenkonstruktion oder einer Gestellanordnung aus Strahlrohr gebildet, die in Abhängigkeit des Einsatzzweckes variabel gestaltet und häufig nach einer Art Baukastensystem zusammengesetzt werden kann.

Insbesondere im Krankenhausbetrieb ist eine gründliche Reinigung auch glatter Oberflächen wie Fliesen- oder Linoleumböden erforderlich. Dabei hat sich gezeigt, dass sich mit der Ausstattung bekannter Reinigungswagen wie insbesondere Mops manche Verunreinigungen weder trocken noch nass zufrieden stellend beseitigen lassen (z.B. Haare oder größere Staubflusen). Dies führt zu einem hohen Nacharbeitungsaufwand, beispielsweise durch Aufnehmen der Restverschmutzungen mittels eines Kehrsets.

Die US 5,946,768 offenbart einen Arbeitswagen mit einer seitlich an dem Wagen angebrachten Saugeinheit.

### Darstellung der Erfindung

Aufgabe der vorliegenden Erfindung ist es daher einen Reinigungswagen zu schaffen, der mit geringem Aufwand die Erzielung eines guten Reinigungsergebnisses ermöglicht und dabei einfach aufgebaut ist.

Diese Aufgabe wird erfindungsgemäß durch einen Reinigungswagen nach Anspruch 1 gelöst. Vorteilhafte Weiterbildungen der Erfindung sind in den abhängigen Ansprüchen angegeben.

Der Erfindung liegt der Gedanke zugrunde, bei einem gattungsgemäßen Reinigungswagen gegenüber den bisherigen Reinigungsutensilien völlig neue Reinigungsmöglichkeiten zu schaffen. Vor diesem Hintergrund ist erfindungsgemäß vorgesehen, dass der Reinigungswagen eine integrierte Saugvorrichtung aufweist, die mindestens eine Saugdüse zum Aufsaugen von Verschmutzungen besitzt, wobei die mindestens eine Saugdüse seitlich oder unter der Basis angeordnet ist. Auf diese Weise können auch Verschmutzungen, die mit Mops oder dergleichen schwierig beseitigt werden können, wirksam und schnell aufgenommen werden. Der Einsatz von Kehrsets wird in vielen Fällen überflüssig, was nicht nur einen beschleunigten Arbeitsablauf, sondern auch eine Entlastung des Reinigungspersonals mit sich bringt, da sich das Reinigungspersonal nicht mehr bücken muss und weniger Verschmutzungen ausgesetzt ist.

Gemäß einer Weiterbildung der Erfindung ist vorgesehen, dass die integrierte Saugvorrichtung eine elektrisch betriebene Saugeinheit aufweist, die mit der mindestens einen Saugdüse in Strömungsverbindung steht. Durch die integrierte und somit stets mitgeführte Saugvorrichtung wird jegliche Beeinträchtigung des Arbeitsablaufes der Reinigungsperson vermieden. Dabei ist es besonders bevorzugt, dass die elektrisch betriebene Saugeinheit eine Akkumulatoreinheit besitzt, sodass der Reinigungswagen stets unabhängig von einer externen Stromversorgung eingesetzt werden kann, mit entsprechenden Vorteilen für einen nicht nur zügigen, sondern auch betriebssicheren Arbeitsablauf.

Gemäß der Erfindung ist ferner vorgesehen, dass die mindestens eine Saugdüse in Bezug auf die Basis zwischen einer ausgefahrenen und einer zurückgezogenen Position verfahrbar ist. Hierdurch kann die Saugdüse zwei Anforderungen gleichzeitig erfüllen, nämlich einen hohen Wirkungsgrad bei einem Saugbetrieb in der ausgefahrenen Position, und eine geringe Störung und Verletzungsgefahr durch die Saugdüse, wenn diese nicht betrieben wird und sich in der zurückgezogenen Position befindet. Dabei ist es besonders bevorzugt, dass zum Verfahren der Saugdüse zwischen der ausgefahrenen und der zurückgezogenen Position eine Betätigungseinrichtung vorgesehen ist, sodass die Bedienperson nicht von Hand an die Saugdüse greifen muss. Hierdurch ergibt sich neben einer geringen Verletzungsgefahr ein effizienter und für die Bedienperson ergonomischer Bedienvorgang der Saugvorrichtung.

Die Betätigungseinrichtung weist mindestens ein Betätigungselement auf, das bevorzugt verschiebbar an dem Aufbau angeordnet ist. Hierdurch kann das Betätigungselement in unmittelbarer Reichweite die Reinigungsperson angeordnet werden, ohne dass diese sich bücken muss. Darüber hinaus kann die Reinigungsperson auf diese Weise mit einer freien Hand einen Besen oder dergleichen benutzen, um den Saugbetrieb der Saugdüse zu unterstützen, obgleich dies selbstverständlich nicht notwendigerweise der Fall sein muss.

Darüber hinaus ist das mindestens eine Betätigungselement im Rahmen der vorliegenden Erfindung dazu eingerichtet, die elektrisch betriebene Saugeinheit ein- und/oder auszuschalten. Hierdurch wird die Anzahl der Handhabungsvorgänge durch die Reinigungsperson minimiert, in dem bei einem Betätigen des mindestens einen Betätigungselement gleichzeitig die elektrisch betriebene Saugeinheit eingeschaltet und die mindestens eine Saugdüse in ihre ausgefahrene Position gebracht wird.

Darüber hinaus ist gemäß einer Weiterbildung der Erfindung vorgesehen, dass der Reinigungswagen ferner eine Rückstelleinrichtung für die mindestens eine Saugdüse aufweist, welche die mindestens eine Saugdüse in Richtung der zurückgezogenen Position beaufschlagt. Hierdurch kann die Betätigungseinrichtung besonders einfach ausgebildet werden, und ein Verfahren der Saugdüse in die zurückgezogene Position kann durch bloßes Loslassen eines Betätigungselements oder dergleiche erzielt werden, was den Bedienvorgang des Reinigungswagens weiter vereinfacht und beschleunigt.

### Kurze Beschreibung der Zeichnungen

- Fig. 1: zeigt schematisch eine Perspektivansicht eines Reinigungswagens als bevorzugte Ausführungsform der vorliegenden Erfindung;
- Fig. 2: zeigt eine weitere Perspektivansicht des in Fig. 1 gezeigten Reinigungswagens.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

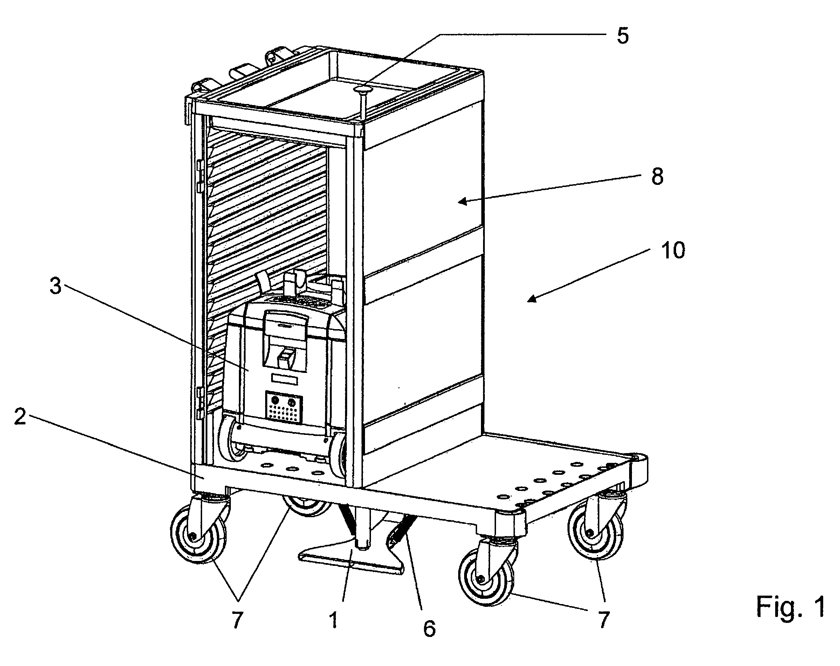

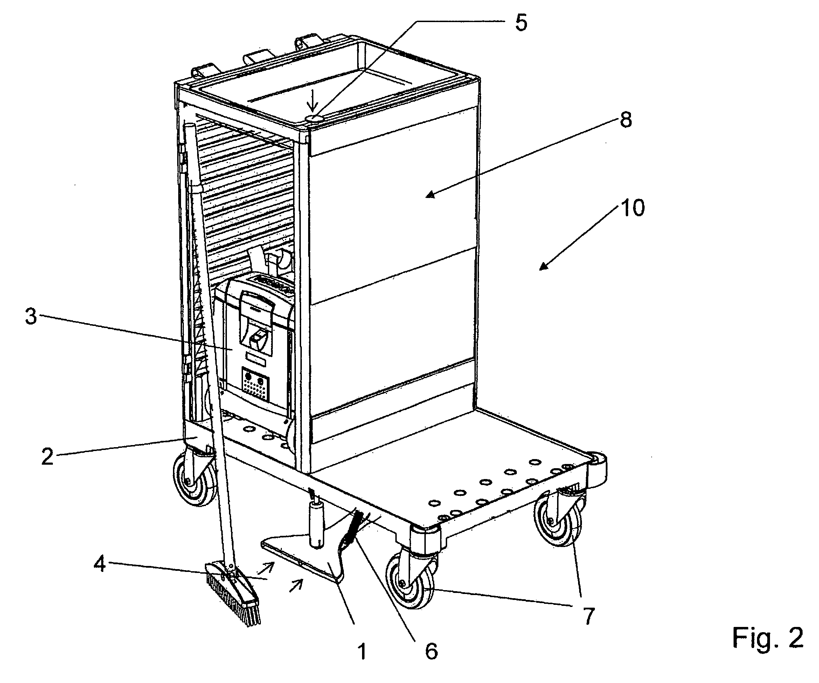

Ein Reinigungswagen 10 gemäß einer ersten Ausführungsform der vorliegenden Erfindung ist in Fig. 1 und Fig. 2 jeweils schematisch in einer Perspektivansicht dargestellt. Der Reinigungswagen 10 besitzt zunächst eine Basis 2 und einen auf der Basis angeordneten Aufbau 8 zur Aufnahme von Reinigungsutensilien wie Wischtüchern, Mops, Eimern, etc. Die Basis 2 und der Aufbau 8 sind in der vorliegenden Ausführungsform durch plattenartige Bauteile gebildet, obgleich sie selbstverständlich auch durch verschiedene Gitter- oder Rahmenkonstruktionen gebildet sein können.

Unter der Basis 2 sind in der vorliegenden Ausführungsform vier drehbare Räder 7 angeordnet, sodass der Reinigungswagen leicht geschoben werden kann.

Der Reinigungswagen 10 besitzt erfindungsgemäß eine integrierte Saugvorrichtung, die in der vorliegenden Ausführungsform durch eine Saugdüse 1 und eine elektrisch betriebene Saugeinheit 3 gebildet ist, die mit der Saugdüse 1 über einen nicht näher gezeigten Schlauch in Strömungsverbindung steht. Die Saugdüse 1 dient zum Aufsaugen von Verschmutzungen, die sich am Boden im Bereich unterhalb der Basis 2 befinden und ist in der vorliegenden Ausführungsform unter der Basis 2 angeordnet. Es ist jedoch ebenso möglich, die Saugdüse 1 seitlich an der Basis 2 anzuordnen.

Bei der elektrisch betriebenen Saugeinheit 3 handelt es sich in der vorliegenden Ausführungsform um einen Staubsauger mit einem eigenen Gehäuse, obgleich die Saugeinheit 3 auch ohne eigenes Gehäuse in den Aufbau 8 des Reinigungswagens 10 integriert sein kann. Ferner ist die elektrisch betriebene Saugeinheit 3 in der vorliegenden Ausführungsform mit einer Akkumulatoreinheit ausgerüstet, sodass diese nicht über einen Netzstecker mit einer Stromversorgung verbunden werden muss, sondern netzunabhängig betrieben werden kann.

Wie anhand eines Vergleichs von Fig. 1 und Fig. 2 am besten zu erkennen ist, ist die Saugdüse 1 in Bezug auf die Basis 2 zwischen einer ausgefahrenen Position (vgl. Fig. 2) und einer zurückgezogenen Position (vgl. Fig. 1) verfahrbar. Bei der ausgefahrenen Position gemäß Fig. 2 handelt es sich um eine Position, in welcher die Saugdüse 1 nahe zum Boden angeordnet ist und die für den Saugbetrieb der Saugdüse 1 vorgesehen ist. Die zurückgezogene Position (Fig. 2) ist hingegen eine Ruheposition, obgleich die Saugdüse 1 auch in dieser Position betrieben werden kann.

Zum Verfahren der Saugdüse 1 zwischen der ausgefahrenen und der zurückgezogenen Position weist der Reinigungswagen 10 eine Betätigungseinrichtung mit einem Betätigungselement 5 auf, das verschiebbar an der Oberseite des Aufbaus 8 angeordnet ist. Das Betätigungselement 5 steht in der vorliegenden Ausführungsform über eine Druckstange mit der Saugdüse 1 in Verbindung, wobei die Druckstange teilweise innerhalb des Aufbaus 8 verläuft. Durch Greifen und Betätigen des Betätigungselements 5 kann somit die Saugdüse 1 problemlos zwischen der ausgefahrenen und der zurückgezogenen Position verfahren werden.

Weiterhin weist der Reinigungswagen 10 eine Rückstelleinrichtung für die Saugdüse 1 auf, die in der vorliegenden Ausführungsform durch zwei Zugfedern 6 gebildet ist, welche die Saugdüse 1 in Richtung der zurückgezogenen Position beaufschlagen. Hierdurch befindet sich die Saugdüse 1 grundsätzlich in der zurückgezogenen Position, kann jedoch durch Niederdrücken des Betätigungselements 5 in die ausgefahrene Position gebracht werden.

Obgleich in den Figuren nicht gezeigt, ist im Bereich des Betätigungselements 5 ferner ein Druckschalter angeordnet, der mit der elektrisch betriebenen Saugeinheit 3 in Verbindung steht, sodass bei einem Betätigen des Betätigungselements 5 die elektrisch betriebene Saugeinheit 3 eingeschaltet bzw. bei einem Loslassen des Betätigungselements 5 die elektrisch betriebene Saugeinheit 3 ausgeschaltet werden kann.

## Patentansprüche

1. Reinigungswagen (10), mit einer Basis (2), mindestens drei seitlich oder unter der Basis angeordneten Rädern (7) und einem über der Basis angeordneten Aufbau (8) zur Aufnahme von Reinigungsutensilien,
wobei der Reinigungswagen eine integrierte Saugvorrichtung aufweist, die mindestens eine Saugdüse (1) zum Aufsaugen von Verschmutzungen besitzt, wobei die mindestens eine Saugdüse (1) seitlich oder unter der Basis (2) angeordnet ist,
wobei die mindestens eine Saugdüse (1) in Bezug auf die Basis (2) zwischen einer ausgefahrenen und einer zurückgezogenen Position verfahrbar ist,
wobei der Reinigungswagen ferner eine Betätigungseinrichtung zum Verfahren der mindestens einen Saugdüse (1) zwischen der ausgefahrenen und der zurückgezogenen Position aufweist, welche mindestens ein Betätigungselement (5) aufweist, das bevorzugt verschiebbar an dem Aufbau (8) angeordnet ist,
**dadurch gekennzeichnet, dass**
das mindestens eine Betätigungselement (5) eingerichtet ist, die elektrisch betriebene Saugeinheit (3) ein- und/oder auszuschalten.

2. Reinigungswagen nach Anspruch 1, **dadurch gekennzeichnet, dass** die integrierte Saugvorrichtung eine elektrisch betriebene Saugeinheit (3) aufweist, die mit der mindestens einen Saugdüse (1) in Strömungsverbindung steht und bevorzugt eine Akkumulatoreinheit besitzt,

3. Reinigungswagen nach Anspruch 1, **dadurch gekennzeichnet, dass** er ferner eine Rückstelleinrichtung (6) für die mindestens eine Saugdüse (1) aufweist, welche die mindestens eine Saugdüse (1) in Richtung der zurückgezogenen Position beaufschlagt.

## Claims

1. Cleaning trolley (10) having a base (2), at least three wheels (7) arranged on the side or below the base and a structure (8) arranged above the base to accommodate cleaning utensils, wherein the cleaning trolley has an integrated vacuum device which has at least one vacuum nozzle (1) for vacuuming up dirt, wherein the at least one vacuum nozzle (1) is arranged on the side or below the base (2), wherein the at least one vacuum nozzle (1) can be moved with respect to the base (2) between a pulled-out and a withdrawn position, wherein the cleaning trolley also has an actuating device for moving the at least one vacuum nozzle (1) between the pulled-out and the withdrawn position, which has at least one actuating element (5) which is preferably arranged to be displaceable on the structure (8), **characterised in that** the at least one actuating element (5) is equipped to switch on and/or switch off the electrically operated vacuum unit (3).

2. Cleaning trolley according to claim 1, **characterised in that** the integrated vacuum device has an electrically operated vacuum unit (3) which is in flow connection with the at least one vacuum nozzle (1) and preferably has a battery unit.

3. Cleaning trolley according to claim 1, **characterised in that** it also has a returning device (6) for the at least one vacuum nozzle (1), which acts upon the at least one vacuum nozzle (1) in the direction of the withdrawn position.

## Revendications

1. Véhicule de nettoyage (10), avec une base (2), au moins trois roues (7) disposées latéralement ou sous la base, et une superstructure (8) disposée au-dessus de la base, pour recevoir des ustensiles de nettoyage,
le chariot de nettoyage présentant un dispositif d'aspiration intégré, comprenant au moins une buse d'aspiration (1) pour aspirer des souillures, la au moins une buse d'aspiration (1) étant disposée latéralement ou sous la base (2),
la au moins une buse d'aspiration (1) étant déplaçable par rapport à la base (2), entre une position déployée et une position rétractée,
le chariot de nettoyage présentant en outre, pour déplacer la au moins une buse d'aspiration (1) entre la position déployée et la position rétractée, un dispositif d'actionnement présentant au moins un élément d'actionnement (5), disposé de préférence de manière déplaçable sur la superstructure (8),
**caractérisé en ce que**
le au moins un élément d'actionnement (5) est agencé pour mettre en service et/ou hors service l'unité d'aspiration (3) à fonctionnement électrique.

2. Véhicule de nettoyage selon la revendication 1, **caractérisé en ce que** le dispositif d'aspiration intégré présente une unité d'aspiration (3) à fonctionnement électrique, placée en liaison d'écoulement avec la au moins une buse d'aspiration (1) et comprenant de préférence une unité à accumulateur.

3. Véhicule de nettoyage selon la revendication 1, **caractérisé en ce qu'**il présente en outre un dispositif de rappel (6) pour la au moins une buse d'aspiration (1), sollicitant la au moins une buse d'aspiration (1) en direction de la position rétractée.
